# EUROPEAN PATENT APPLICATION

(11) **EP 3 007 070 A1**
(43) Date of publication of application: **13.04.2016**
(21) Application number: 13885961.6
(22) Date of filing: 26.11.2013
(51) Int. Cl.: G06F 12/08

(54) **MEMORY SYSTEM, MEMORY ACCESS REQUEST PROCESSING METHOD AND COMPUTER SYSTEM**

(30) Priority: 31.05.2013 CN 201310213533
(71) Applicant: Huawei Technologies Co., Ltd., Longgang District Shenzhen, Guangdong 518129 (CN)
(72) Inventor: CHEN, Licheng, Beijing 100190 (CN); ZHANG, Lixin, Beijing 100190 (CN); CHEN, Mingyu, Beijing 100190 (CN)
(74) Representative: Thun, Clemens
(86) International application number: PCT/CN2013/087840
(87) International publication number: WO 2014/190695

(57) **Abstract**

The present invention discloses a memory system, a method for processing a memory access request, and a computer system. The memory system includes: a first type of memory and a second type of memory that are of different types and separately configured to store operating data of a processor; a memory indexing table that stores a fetch address of a data unit block located in the first type of memory; a buffer scheduler, configured to receive a memory access request of a memory controller, determine whether the data unit block corresponding to the fetch address is stored in the first type of memory or the second type of memory, and complete a fetch operation of the memory access request in the determined memory; and a migration scheduler, configured to update access information of the data unit block, determine, according to the access information of the data unit block, whether to migrate the data unit block in the second type of memory to the first type of memory, and update the memory indexing table after migration.

## Description

### TECHNICAL FIELD

The present invention relates to the field of computer storage technologies, and in particular, to a memory system, a method for processing a memory access request, and a computer system.

### BACKGROUND

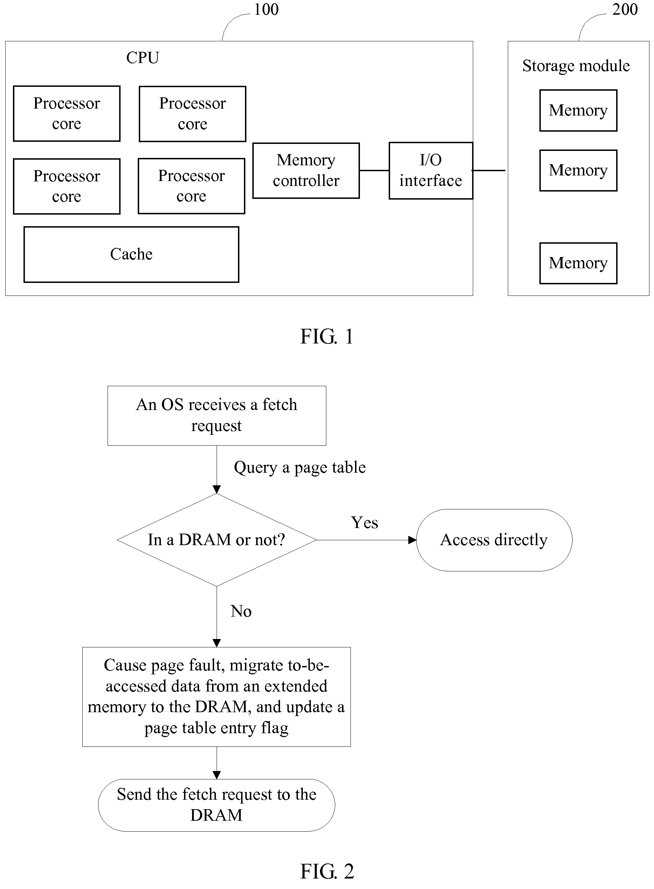

Requirements for a processing speed of a processor and a read speed of data storage increase as computer technologies rapidly develop. A multi-core processor refers to that two or more complete computing engines (cores) are integrated into one processor. Referring to FIG. 1, an architecture of a multi-core multi-memory computer includes a CPU 100 and a storage module 110, where the CPU includes a plurality of processor cores and a cache, a memory controller is connected to the storage module by an I/O interface, and the storage module includes a plurality of memory modules.

As data that needs to be processed in a data center (Data Center) is scaling up, to store data in memories as much as possible and thereby accelerate a processing speed, a requirement of the data center for a memory capacity also increases. One or more memory channels may exist in a conventional memory system, and these memory channels are managed by a memory controller. Each memory channel may support one or more memory slots, and a memory module and a memory module is mounted to each memory slot. A path for interaction exists between the memory controller and one memory channel, and between the memory channel and the memory module. Different memory channels are independent of each other and different memory modules are independent of each other. A conventional memory uses a DRAM of a DDRx (such as a DDR3) protocol that is based on synchronous timing; however, the DRAM has disadvantages such as low bit density, and high static power consumption (because the DRAM needs to be refreshed regularly); and a research shows that power consumption consumed by memories in a data center accounts for more than 25% of total power consumption of an entire system. In recent years, a plurality of new memory materials have emerged, such as non-volatile memories (Non-Volatile Memory, NVM) like a phase change memory (Phase Change Memory, PCM), a magnetic random access memory (Magnetic Random Access Memory, MRAM), and a flash memory (Flash). These NVMs have advantages such as high bit density, and low static power consumption, and furthermore, even if there is a power failure, data can be retained (which is non-volatile). Although read access latency of some NVMs (such as a PCM) may be merely a little inferior to a DRAM, their write access latency is much higher than the DRAM, and write endurance of an NVM is limited. Due to these disadvantages, an NVM serves as an extended memory of a DRAM instead of a memory that completely replaces the DRAM. An extended memory includes but is not limited to an NVM, and also includes another storage type.

Using hybrid memories of a DRAM and an extended memory becomes a trend in the future, and a DRAM is generally used as a cache (Cache) for an extended memory, and frequently accessed data is placed in the DRAM to reduce access latency. However, a conventional DDR synchronous fetch timing cannot directly process this type of heterogeneous non-uniform fetch latency, and requires software (such as an operating system OS or a virtual machine monitor VMM) to be responsible for processing. Hybrid memories are not transparent to software.

A synchronous access interface of a conventional DDR memory requires that an access command has an inherent latency; and therefore, the DDR memory cannot directly process this type of non-uniform fetch latency characteristic brought by hybrid memories, and requires software (such as an operating system or a virtual machine monitor) to be responsible for processing non-uniform latency. FIG. 2 shows a process in which software processes a request for accessing hybrid memories. An OS (operating system) is used as an example herein, and a VMM (virtual machine monitor) has a similar mechanism as that of the OS. In this case, the hybrid memories at an underlying layer are not transparent to the OS. The OS needs to maintain which pages (Page) are currently in a DRAM and which pages are only in an extended memory. This is generally implemented by adding a flag byte in a page table entry. When receiving a memory access request, the OS first queries a page table to learn about whether data to be accessed is in the DRAM. If yes, the DRAM is accessed directly; if not, a page fault (Page Fault) needs to be generated, a page is first migrated from the extended memory to the DRAM, a flag byte in a corresponding page table entry is updated, and finally the memory access request can be sent to the DRAM.

To optimize performance, software is further responsible for collecting access frequency information of a page, and the frequency information is usually stored in a page table entry to guide a page migration strategy, for example, if a page that is frequently written to is stored in a DRAM, software overheads are relatively large. In addition, for a large-scale system using hybrid memories, Checkpoint protection further needs to be regularly performed on software, to write a machine status back into the extended memory.

### SUMMARY

The objectives of embodiments of the present invention are to provide a memory system and a method for a memory access request, so as to improve a memory access speed.

According to a first aspect, a memory system is provided, including:
a first type of memory and a second type of memory, separately configured to store operating data of a processor, where the first type of memory and the second type of memory are of different types;
a buffer, configured to store a memory indexing table, where the memory indexing table includes a fetch address of a data unit block located in the first type of memory; and
a buffer scheduler, configured to receive a memory access request sent by a memory controller, where the memory request includes a fetch address and a fetch operation; determine, according to the fetch address and the memory indexing table, whether a data unit block corresponding to the fetch address is stored in the first type of memory or the second type of memory; perform the fetch operation of the memory access request in the determined first type of memory or second type of memory; and return a result of the fetch operation of the memory access request to the memory controller.

In a first possible implementation manner, the buffer scheduler is further configured to: when it is determined that the data unit block corresponding to the fetch address is stored in the second type of memory, send a notification of updating access information of the data unit block; and the memory system further includes:
a migration scheduler, configured to receive the notification sent by the migration scheduler and update the access information of the data unit block; determine, according to the access information of the data unit block, whether to migrate the data unit block in the second type of memory to the first type of memory; and update the memory indexing table after migration.

With reference to the first aspect or the first possible implementation manner of the first aspect, in a second possible implementation manner, the buffer scheduler is specifically configured to: when it is determined that the data unit block is located in the first type of memory, complete the memory access request in the first type of memory; and when it is determined that the data unit block is located in the second type of memory, complete the memory access request in the second type of memory.

With reference to the first aspect or the first possible implementation manner of the first aspect, in a third possible implementation manner, the buffer scheduler is specifically configured to: when it is determined that the data unit block is located in the first type of memory, complete the memory access request in the first type of memory; and when it is determined that the data unit block is located in the second type of memory, migrate the data unit block in the second type of memory to the first type of memory, and complete the memory access request in the first type of memory.

With reference to the first aspect or the second possible implementation manner of the first aspect or the third possible implementation manner of the first aspect, in a fourth possible implementation manner, the buffer scheduler includes:
a parsing module, configured to parse a memory access request packet sent by the memory controller, to extract the memory access request, where the memory request includes the fetch address and the fetch operation;
a first request queue, configured to store a memory access request for accessing the first type of memory;
a second request queue, configured to store a memory access request for accessing the second type of memory;
a determining module, configured to query the memory indexing table by using the fetch address, to determine whether a data unit block requested by a memory access request is in the first type of memory; store the memory access request in the first request queue if the data unit block is in the first type of memory; and store the memory access request in the second request queue if the data unit block is not in the first type of memory;
a first return queue, configured to store a result of a fetch operation of the memory access request for accessing the first type of memory;
a second return queue, configured to store a result of a fetch operation of the memory access request for accessing the second type of memory;
a scheduling module, configured to schedule the memory access request in the first request queue to the first type of memory to execute the fetch operation corresponding to the memory access request, and schedule the memory access request in the second request queue to the second type of memory to execute the fetch operation corresponding to the memory access request; and
a packaging module, configured to package results of fetch operations of a plurality of memory access requests into a packet, and return the packet to the memory controller.

With reference to the first aspect or the second possible implementation manner of the first aspect or the third possible implementation manner of the first aspect or the fourth possible implementation manner of the first aspect, in a fifth possible implementation manner, the access information includes a quantity of access operations, and the migration scheduler includes:
a register, configured to store a migration threshold;
a migration determining logical module, configured to compare the quantity of access operations with the migration threshold, and determine whether to migrate a data unit block in the second type of memory to the first type of memory according to a comparison result;
a command buffer, configured to store a migration command when the migration determining logical outputs a result that migration is required;
a data buffer, configured to temporarily store stored data that is in the second type of memory and of a data unit block corresponding to the migration command; and
an updating module, configured to update the quantity of access operations corresponding to the data unit block, and update the memory indexing table when the migration determining logical outputs the result that migration is required.

With reference to the first aspect or the second possible implementation manner of the first aspect or the third possible implementation manner of the first aspect or the fourth possible implementation manner of the first aspect or the fifth possible implementation manner of the first aspect, in a sixth possible implementation manner, the first type of memory is a volatile memory module, and the second type of memory is a non-volatile memory module.

With reference to the first aspect or the second possible implementation manner of the first aspect or the third possible implementation manner of the first aspect or the fourth possible implementation manner of the first aspect or the fifth possible implementation manner of the first aspect, in a seventh possible implementation manner, an access speed of the first type of memory is faster than an access speed of the second type of memory.

According to a second aspect, a memory system is provided, including:
a volatile memory and a non-volatile memory, separately configured to store operating data of a processor;
a buffer, configured to store a tag table, where the tag table is used to indicate access information of a data unit block and includes a fetch address, a memory location, and a quantity of fetch operations of the data unit block, and the memory location indicates whether the data unit block is stored in the volatile memory or the non-volatile memory; and
a buffer scheduler, configured to receive a memory access request of a memory controller, where the memory request includes a fetch address and a fetch operation; query the tag table by using the fetch address, to determine whether the data unit block is stored in the volatile memory or the non-volatile memory; complete the fetch operation of the memory access request in the determined volatile memory or non-volatile memory; and return a result of the memory access request to the memory controller.

In a first possible implementation manner of the second aspect, the buffer scheduler is further configured to send a notification of updating the access information of the data unit block, and the memory system further includes:
a migration scheduler, configured to receive the notification and update the access information of the data unit block in the tag table; determine, according to the access information of the data unit block, whether to migrate the data unit block in the non-volatile memory to the volatile memory; and update the tag table after migration.

In a second possible implementation manner of the second aspect, the buffer scheduler includes:
a parsing module, configured to parse a memory access request packet sent by the memory controller, to extract the memory access request;
a first request queue, configured to store a memory access request for accessing the volatile memory;
a second request queue, configured to store a memory access request for accessing the non-volatile memory;
a determining module, configured to query a memory indexing table by using the fetch address, to determine whether a data unit block requested by each memory access request is in the volatile memory; store the memory access request in the first request queue if the data unit block is in the volatile memory, and store the memory access request in the second request queue if the data unit block is not in the volatile memory; and send a notification of updating the access information of the data unit block;
a first return queue, configured to store a result of the memory access request for accessing the volatile memory;
a second return queue, configured to store a result of the memory access request for accessing the non-volatile memory;
a scheduling module, configured to schedule the memory access request in the first request queue to the volatile memory to execute a fetch operation corresponding to the memory access request, and schedule the memory access request in the second request queue to the non-volatile memory to execute a fetch operation corresponding to the memory access request; and
a packaging module, configured to package results of a plurality of memory access requests into a packet, and return the packet to the memory controller.

With reference to the second aspect or the first possible implementation manner of the second aspect, in a third possible implementation manner, the access information includes the quantity of access operations, and the migration scheduler includes:
a register, configured to store a migration threshold;
a migration determining logical module, configured to compare the quantity of access operations with the migration threshold to determine whether to migrate a page in the non-volatile memory to the volatile memory;
a command buffer, configured to store a migration command when the migration determining logical outputs a result that migration is required;
a data buffer, configured to temporarily store stored data that is in the non-volatile memory and of a data unit block corresponding to the migration command; and
a tag updating module, configured to update the quantity of access operations corresponding to the data unit block, and update the memory indexing table when the migration determining logical outputs the result that migration is required.

With reference to the second aspect or the first possible implementation manner of the second aspect or the second possible implementation manner of the second aspect or the third possible implementation manner of the second aspect, in a fourth possible implementation manner, the volatile memory is a DRAM (Dynamic Random Access Memory, dynamic random access memory), and the non-volatile memory is an NVM (Non-Volatile Memory, non-volatile memory).

According to a third aspect, a method for processing a memory access request is provided, including:
receiving a memory access request packet, and obtaining a fetch address and a fetch operation of a memory access request from the request packet;
querying a memory indexing table by using the fetch address in the memory access request, to determine whether a data unit block corresponding to the access request is stored in a first type of memory or a second type of memory, and instructing a migration scheduler to update access information of the data unit block, where the first type of memory and the second type of memory are of different types; and
completing the fetch operation of the memory access request in the first type of memory if the data unit block is stored in the first type of memory, and returning a result of the memory access request to an initiator of the memory access request; or
completing the fetch operation of the memory access request in the second type of memory if the data unit block is stored in the second type of memory, and returning a result of the memory access request to an initiator of the memory access request.

In a first possible implementation manner, the completing the fetch operation of the memory access request in the second type of memory if the data unit block is stored in the second type of memory, and returning a result of the memory access request to an initiator of the memory access request includes:
migrating the data unit block to be accessed to the first type of memory if the data unit block is stored in the second type of memory, and then completing the fetch operation of the memory access request in the first type of memory, and returning a result of the memory access request to the initiator of the memory access request.

In a second possible implementation manner, the completing the fetch operation of the memory access request in the second type of memory if the data unit block is stored in the second type of memory, and returning a result of the memory access request to an initiator of the memory access request includes:
accessing the second type of memory directly if the data unit block is in the second type of memory, completing the fetch operation of the memory access request, and returning a result of the memory access request to the initiator of the memory access request.

With reference to the third aspect or the first possible implementation manner of the third aspect or the second possible implementation manner of the third aspect, in a third possible implementation manner, the method further includes:
determining, by the migration scheduler according to the access information of the data unit block, whether to migrate the data unit block located in the second type of memory to the first type of memory.

With reference to the third possible implementation manner of the third aspect, in a fourth possible implementation manner, the access information includes a quantity of access operations, and the determining, by the migration scheduler according to the access information of the data unit block, whether to migrate the data unit block located in the second type of memory to the first type of memory includes:
comparing, by the migration scheduler, a recorded quantity of access operations of the data unit block with a migration threshold, and determining that migration is required if the quantity of access operations is greater than or equal to the migration threshold, and that migration is not required if the quantity of access operations is not greater than or equal to the migration threshold.

With reference to the fourth possible implementation manner of the third aspect, in a fifth possible implementation manner, the method further includes:
updating, by the migration scheduler, information of the memory indexing table when determining that migration is required.

According to a fourth aspect, a method for processing a memory access request is provided, including:
receiving a memory access request packet, and obtaining a fetch address and a fetch operation of a memory access request from the request packet;
querying a tag table by using the fetch address in the memory access request, to determine whether a data unit block corresponding to the access request is stored in a volatile memory or a non-volatile memory, where the tag table is used to indicate access information of the data unit block and includes a fetch address, a memory location, and a quantity of fetch operations of the data unit block, and the memory location indicates whether the data unit block is stored in the volatile memory or the non-volatile memory; and
completing the fetch operation of the memory access request in the volatile memory if the data unit block is stored in the volatile memory, and returning a result of the memory access request to an initiator of the memory access request; or
completing the fetch operation of the memory access request in the non-volatile memory if the data unit block is stored in the non-volatile memory, and returning a result of the memory access request to an initiator of the memory access request.

In a first possible implementation manner, the completing the fetch operation of the memory access request in the non-volatile memory if the data unit block is stored in the non-volatile memory, and returning a result of the memory access request to an initiator of the memory access request includes:
migrating the data unit block to be accessed to the volatile memory if the data unit block is stored in the non-volatile memory, and then completing the fetch operation of the memory access request in the volatile memory, and returning a result of the memory access request to the initiator of the memory access request.

In a second possible implementation manner, the completing the fetch operation of the memory access request in the non-volatile memory if the data unit block is stored in the non-volatile memory, and returning a result of the memory access request to an initiator of the memory access request includes:
accessing the non-volatile memory directly if the data unit block is in the non-volatile memory and completing the fetch operation of the memory access request, and returning a result of the memory access request to the initiator of the memory access request.

With reference to the fourth aspect or the first possible implementation manner of the fourth aspect or the second possible implementation manner of the fourth aspect, in a third possible implementation manner, the access information includes the quantity of access operations, and determining, according to the access information of the data unit block, whether to migrate the data unit block located in the non-volatile memory to the volatile memory includes:
comparing a recorded quantity of access operations of the data unit block with a migration threshold, and determining that migration is required if the quantity of access operations is greater than or equal to the migration threshold, and that migration is not required if the quantity of access operations is not greater than or equal to the migration threshold.

With reference to the fourth aspect or the first possible implementation manner of the fourth aspect or the second possible implementation manner of the fourth aspect or the third possible implementation manner of the fourth aspect, in a fourth possible implementation manner, the method further includes:
updating the access information of the data unit block in the tag table; and
determining, according to the access information of the data unit block, whether to migrate the data unit block located in the non-volatile memory to the volatile memory, and updating the tag table after migration.

According to a fifth aspect, a computer system is provided, including:
a multi-core processor, including a memory controller that is configured to initiate a memory access request; and
a memory system provided according to any possible implementation manners of the first aspect or the second aspect.

In the embodiments of the present invention, management of different types of memories is implemented by hardware. There is a first type of memory and a second type of memory that are of different types in a memory system. A memory access request may be separately completed in the first type of memory and the second type of memory, which is transparent to an OS, does not cause page fault, and can improve a memory access speed.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an architecture of a multi-core multi-memory computer;
FIG. 2 is a schematic flowchart of software processing access to hybrid memories;
FIG. 3 is a schematic structural diagram of an embodiment of a memory system according to the present invention;
FIG. 4 is a schematic structural diagram of an embodiment of a buffer scheduler according to the present invention;
FIG. 5 is a schematic structural diagram of an embodiment of a migration scheduler according to the present invention;
FIG. 6 is a schematic structural diagram of another embodiment of a memory system according to the present invention;
FIG. 7 is a schematic structural diagram of another embodiment of a buffer scheduler according to the present invention;
FIG. 8 is a schematic flowchart of a buffer scheduler processing a memory access request according to the present invention;
FIG. 9 is a schematic structural diagram of an embodiment of a tag table according to the present invention;
FIG. 10 is a schematic structural diagram of another embodiment of a migration scheduler according to the present invention;
FIG. 11 is a schematic flowchart of a migration scheduler determining whether a page is required to be migrated according to the present invention;
FIG. 12 is a schematic structural diagram of an embodiment of a computer system according to an embodiment of the present invention;
FIG. 13 is a schematic structural diagram of another embodiment of a computer system according to an embodiment of the present invention;
FIG. 14 is a schematic flowchart of an embodiment of a method for processing a memory access request according to an embodiment of the present invention; and
FIG. 15 is a schematic flowchart of another embodiment of a method for processing a memory access request according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To facilitate understanding of the technical solutions of the present invention, some technical terms that appear in the embodiments of the present invention are explained first. A CPU (Central Processing Unit, central processing unit) mentioned in the embodiments of the present invention is a type of processor, and the processor may also be an ASIC (Application Specific Integrated Circuit, application specific integrated circuit), or one or more other integrated circuits configured to implement the embodiments of the present invention. A person skilled in the art may understand that another implementation manner of the processor may also replace the CPU in the embodiments of the present invention.

A memory controller is an important part for controlling memory module (or referred to as a memory) and exchanging data between the memory and a processor inside a computer system. Currently, a common practice is to embed the memory controller in a CPU. However, the memory controller and the CPU may also be separately implemented independently and communicate by using a connection.

A memory module is configured to store operating data of a processor (for example, a CPU). Generally, a memory module includes one or more storage units (or referred to as memory chips). A memory channel interface is an interface that is on a memory module and used to connect a memory channel. A memory channel is a channel connecting a memory module to a memory controller.

Several commonly used memory modules are described below as examples. A DIMM (Dual Inline Memory Modules, dual inline memory module) is a new memory module emerging after a release of a Pentium CPU. The DIMM provides a 64-bit data channel; and therefore, it can be used alone on a Pentium motherboard. The DIMM is longer than a slot of a SIMM (single in-line memory module, single in-line memory module), and the DIMM also supports a new 168-pin EDORAM (Extended Data Output RAM, extended data output RAM) memory. A DRAM (Dynamic Random Access Memory, dynamic random access memory) is a most common memory chip, and a DIMM or a SIMM may include one or more DRAMs. The DRAM can retain data for only a very short time. To retain data, the DRAM uses a capacitor for storage; and therefore, refresh is required every a period of time, and if a storage unit is not refreshed, stored information is lost. Data stored in the DRAM is also lost after power-off or a power failure. An NVM (Non-Volatile Memory, non-volatile memory) is another type of memory granule that can be used as a memory chip, and a DIMM or a SIMM may include one or more NVMs. Generally, the NVM is used to store a program and data, and data stored in the NVM is not lost after power-off or a power failure, which is different from a characteristic of the DRAM. Each time when a memory reads or writes data, the operation is performed based on a certain data unit, where the data unit is a page or a memory page (Page), which generally represents 4k of data.

In addition, it should be noted that a "connection" described in the embodiments of the present invention indicates that there is a communication connection among two or more virtual modules, among two or more entity modules, or between an entity module and a virtual module, and its specific implementation may be one or more communication lines or signal lines. Unless otherwise specified, the "connection" may be a direct connection, may be a connection by using an interface or a port, or may be a connection by using another virtual module or entity module. Unless otherwise specified, a "first" and a "second" in the embodiments of the present invention are only for differentiation but not for indicating a particular order.

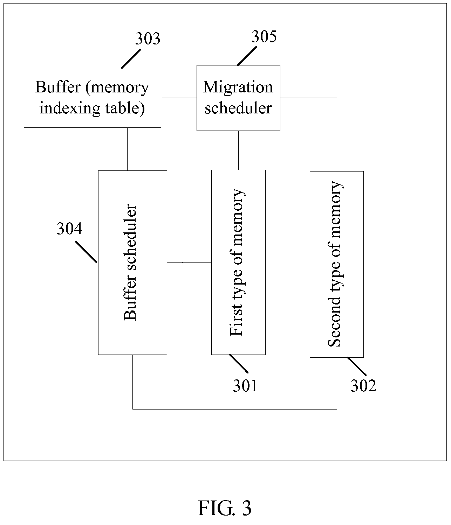

Referring to FIG. 3, FIG. 3 shows an embodiment of a memory system, including:
a first type of memory 301, configured to store operating data of a processor;
a second type of memory 302, configured to store operating data of the processor, where the first type of memory and the second type of memory are of different types;
a buffer 303, configured to store a memory indexing table, where the memory indexing table includes a fetch address of a data unit block located in the first type of memory; and
a buffer scheduler 304, configured to receive a memory access request of a memory controller, where the memory request includes a fetch address and a fetch operation; determine, according to the fetch address and the memory indexing table, whether a data unit block corresponding to the fetch address is stored in the first type of memory or the second type of memory; complete the memory access request in the determined first type of memory or second type of memory; and return a result of the memory access request to the memory controller.

Further, in an embodiment, the buffer scheduler is further configured to: when it is determined that the data unit block corresponding to the fetch address is stored in the second type of memory, send a notification of updating access information of the data unit block. The memory system further includes: a migration scheduler 305, configured to receive the notification sent by the migration scheduler and update the access information of the data unit block; determine, according to the access information of the data unit block, whether to migrate the data unit block in the second type of memory to the first type of memory; and update the memory indexing table after migration.

The first type of memory and the second type of memory may separately be a memory module, or may separately be at least one memory chip, and their granularities are not restricted, provided that they can store the operating data of the processor. The first type of memory and the second type of memory are of different types, which may be that storage media of the two memories are of different types or storage speeds of the two memories are different. In an embodiment, the first type of memory is a volatile memory module, and the second type of memory is a non-volatile memory module (a read/write speed of the first type of memory is faster than that of the second type of memory). In another embodiment, both the first type of memory and the second type of memory are volatile memory modules, where a read/write speed of the first type of memory is faster than that of the second type of memory. In another embodiment, both the first type of memory and the second type of memory are non-volatile memory modules, where a read/write speed of the first type of memory is faster than that of the second type of memory.

In an embodiment, the buffer scheduler may directly complete the memory access request in the second type of memory. The buffer scheduler is specifically configured to: when it is determined that the data unit block is located in the first type of memory, complete the memory access request in the first type of memory; and when it is determined that the data unit block is located in the second type of memory, complete the memory access request in the second type of memory.

In another embodiment, the buffer scheduler does not directly complete the memory access request in the second type of memory. The buffer scheduler is specifically configured to: when it is determined that the data unit block is located in the first type of memory, complete the memory access request in the first type of memory; and when it is determined that the data unit block is located in the second type of memory, migrate the data unit block in the second type of memory to the first type of memory, and complete the memory access request in the first type of memory. In an embodiment, the data unit block may be replicated to the first type of memory, and then deleted after access is completed.

In an embodiment, the access information includes a quantity of access operations, and the migration scheduler is specifically configured to: compare a recorded quantity of access operations of the data unit block with a migration threshold, and determine that migration is required if the quantity of access operations is greater than or equal to the migration threshold, and that migration is not required if the quantity of access operations is not greater than or equal to the migration threshold. The migration threshold may be set as required.

The memory indexing table is used to indicate a data unit block in the first type of memory. In an embodiment, the memory indexing table stores only a fetch address of a data unit block located in the first type of memory. In another embodiment, the memory indexing table stores fetch addresses of data unit blocks corresponding to all memory access requests, and includes a fetch address, a memory location, and a quantity of fetch operations of a data unit block, where the memory location indicates whether the data unit block is stored in the first type of memory or the second type of memory. In another embodiment, the memory indexing table stores fetch addresses of data unit blocks corresponding to all memory access requests, and includes a fetch address, a memory location, a quantity of fetch operations, and a data update flag of a data unit block, where the memory location indicates whether the data unit block is stored in the first type of memory or the second type of memory, and the data update flag indicates that content of the data unit block is updated. When the fetch operation of the received memory access request is a write operation, the content of the data unit block is updated. Certainly, the memory indexing table may also store other information. A buffer that stores the memory indexing table may be physically implemented by using storage media such as an SRAM and a DRAM. An SRAM is recommended because its access speed is faster. As for a physical location, the buffer may be located inside or outside the buffer scheduler, or located inside or outside the migration scheduler.

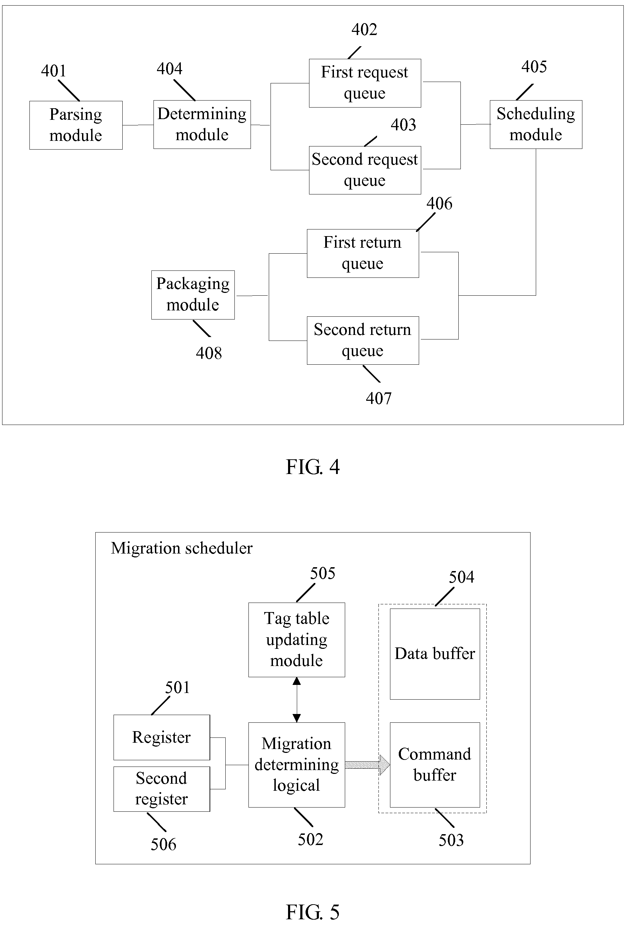

Referring to FIG. 4, in an embodiment, the buffer scheduler includes:
a parsing module 401, configured to parse a memory access request packet sent by the memory controller, to extract the memory access request;
a first request queue 402, configured to store a memory access request for accessing the first type of memory;
a second request queue 403, configured to store a memory access request for accessing the second type of memory;
a determining module 404, configured to query the memory indexing table by using the fetch address in the memory access request to determine whether a data unit block requested by each memory access request is in the first type of memory, store the memory access request in the first request queue if the data unit block is in the first type of memory, and store the memory access request in the second request queue if the data unit block is not in the first type of memory;
a scheduling module 405, configured to schedule the memory access request in the first request queue to the first type of memory to execute the fetch operation corresponding to the memory access request, and schedule the memory access request in the second request queue to the second type of memory to execute the fetch operation corresponding to the memory access request; and
a first return queue 406, configured to store a result of the memory access request for accessing the first type of memory;
a second return queue 407, configured to store a result of the memory access request for accessing the second type of memory; and
a packaging module 408, configured to package a result of at least one memory access request into a packet and return the packet to the memory controller.

Referring to FIG. 5, in an embodiment, the access information includes a quantity of access operations, and the migration scheduler includes:
a register 501, configured to store a migration threshold;
a migration determining logical 502, configured to compare the quantity of access operations with the migration threshold to determine whether to migrate a page in the second type of memory to the first type of memory;
a command buffer 503, configured to store a migration command when the migration determining logical outputs a result that migration is required;
a data buffer 504, configured to temporarily store stored data that is in the second type of memory and of a data unit block corresponding to the migration command; and
an updating module 505, configured to update the quantity of access operations corresponding to the data unit block, and update the memory indexing table when the migration determining logical outputs the result that migration is required.

When the quantity of access operations is greater than or equal to the migration threshold, the migration determining logical 503 outputs a result that a page in the second type of memory needs to be migrated to the first type of memory; and when the quantity of access operations is less than the migration threshold, the migration determining logical 503 outputs a result that a page in a second type of memory does not need to be migrated to the first type of memory.

When the memory indexing table stores only a fetch address of a data unit block located in the first type of memory, the migration scheduler further includes: a second register, configured to store operation information of the data unit block, where the operation information includes a quantity of access operations. In another embodiment, the memory indexing table stores fetch addresses of data unit blocks corresponding to all memory access requests, and the migration scheduler directly updates the quantity of access operations of the data unit block in the memory indexing table. Apparently, the register and the second register may physically be one unit or two units; and the command buffer and the data buffer may also physically be one unit or two units. The register may be physically located inside or outside the migration determining logical.

The access operations include a read operation and a write operation. The register may separately store a migration threshold of the read operation and a migration threshold of the write operation. The second register may separately store a quantity of read operations and a quantity of write operations of a data unit block. When determining, the migration determining logical 503 separately determines the read operation and the write operation.

Migration in the foregoing embodiment refers that data in a memory is moved from a memory module to another memory module, and migration herein may also be replaced with moving or replication. The data unit block in the foregoing embodiment refers to a unit of data stored by a memory module or a smallest unit of data migration before memories. In an embodiment, the data unit block is a page (page), and generally, a page represents 4k of memory data.

In the foregoing embodiment, a memory system that uses hardware to implement heterogeneity implements management of memories of different types. A first type of memory and a second type of memory that are of different types exist in the memory system, and memory access requests may be completed in the first type of memory and the second type of memory, respectively, which requires no OS or other software for processing, does not cause page fault, and can improve a memory access speed; and implementation by hardware can reduce software overheads.

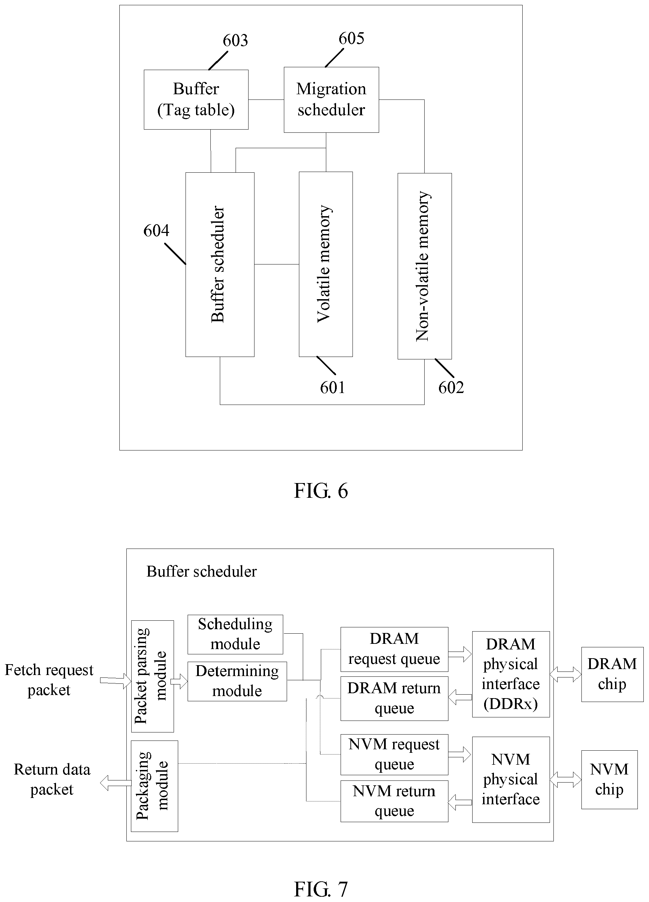

Referring to FIG. 6, FIG. 6 shows another embodiment of a memory system, including:
a volatile memory 601, configured to store operating data of a processor;
a non-volatile memory 602, configured to store operating data of the processor;
a buffer 603, configured to store a tag (tag) table, where the tag table is used to indicate access information of a data unit block, and store a fetch address, a memory location, and a quantity of fetch operations of the data unit block, and the memory location indicates whether the data unit block is stored in the volatile memory or the non-volatile memory; and
a buffer scheduler 604, configured to receive a memory access request of a memory controller, where the memory request includes a fetch address and a fetch operation; query the tag table by using the fetch address, to determine whether a page corresponding to the fetch address is stored in the volatile memory or the non-volatile memory; complete the fetch operation of the memory access request in the determined volatile memory or non-volatile memory; and return a result of the memory access request to the memory controller.

Further, in another embodiment, the buffer scheduler is further configured to send a notification of updating the access information of the data unit block. The memory system further includes: a migration scheduler 605, configured to receive the notification and update the access information of the data unit block in the tag table; determine, according to the access information of the data unit block, whether to migrate the data unit block in the non-volatile memory to the volatile memory; and update the tag table after migration.

In this embodiment, the tag table stores fetch addresses of data unit blocks corresponding to all memory access requests. In an embodiment, the tag table includes a fetch address, a memory location, and a quantity of fetch operations of a data unit block, where the memory location indicates whether the data unit block is stored in the first type of memory or the second type of memory. In another embodiment, the tag table includes a fetch address, a memory location, a quantity of fetch operations, and a data update flag of a data unit block, where the memory location indicates whether the data unit block is stored in the first type of memory or the second type of memory, and the data update flag indicates that content of the data unit block is updated. When the fetch operation of the received memory access request is a write operation, the content of the data unit block is updated. Certainly, the tag table may also store other information. A buffer that stores the tag table may be physically implemented by using storage media such as an SRAM and a DRAM. An SRAM is recommended because its access speed is faster. As for a physical location, the buffer may exist independently, or may be located inside or outside the buffer scheduler, or located inside or outside the migration scheduler.

In an embodiment, the data unit block is a page.

Compared with the foregoing embodiment, in this embodiment, a first type of memory is specifically a volatile memory, a second type of memory is specifically a non-volatile memory, a memory indexing table is specifically a tag table, and a data unit block is specifically a page. Apparently, the volatile memory and the non-volatile memory may separately be a memory module, or may separately be at least one memory chip, and their granularities are not restricted. The embodiments of the buffer scheduler and the migration scheduler in the foregoing embodiment may also be used in this embodiment, a difference lies in that the first type of memory in the foregoing embodiment is specifically the volatile memory in this embodiment, the second type of memory in the foregoing embodiment is specifically the non-volatile memory in this embodiment, and the data unit block in the foregoing embodiment is specifically a page in this embodiment.

In an embodiment, the volatile memory is a DRAM, and the non-volatile memory is an NVM.

In this embodiment, management of hybrid memories is implemented by using hardware in the memory system. A page that is frequently operated is stored in the volatile memory, and a page that is not frequently operated is stored in the non-volatile memory. Memory access requests may be completed in the volatile memory and the non-volatile memory, respectively, so as to reduce interference from a randomly accessed page to access performance of a page with good locality of reference, which can improve a memory access speed; and page migration from the non-volatile memory to the volatile memory can be implemented, which improves access performance.

Referring to FIG. 7, that the volatile memory is a DRAM, the non-volatile memory is an NVM, the data unit block is specifically a page, and the memory access request is a fetch request message is used as an example. FIG. 7 shows an embodiment of the buffer scheduler, including:
a packet parsing module, a packaging module, a determining module, a scheduling module, request queues and return queues. The request queues and the return queues are separately managed according to different storage media, and include a DRAM request queue, an NVM request queue, a DRAM return queue and an NVM return queue in this embodiment. The packet parsing module is responsible for parsing a memory access request packet sent by the memory controller, to extract the memory access request. It should be noted that a packet may include a plurality of read/write requests, and a memory access request includes information such as a fetch address, a fetch granularity, a fetch operation (a read operation or a write operation), and a priority. For each memory access request, the determining module queries a tag table by using the fetch address, to determine whether an accessed page is in the DRAM, places the memory access request in the DRAM request queue if the accessed page is in the DRAM, and places the request in the NVM request queue if the accessed page is not in the DRAM. The scheduling module is responsible for scheduling memory access requests in the request queues, and scheduling, by using respective physical interfaces, the requests to corresponding memory chips for execution: scheduling a request in the DRAM by using a DRAM physical interface, and scheduling an NVM request by using an NVM physical interface. After a read request is completed, returned data is placed in a corresponding return queue, and finally placed to a global return queue; and the packaging module is used to package data returned by a plurality of requests into a packet and return the packet to the memory controller.

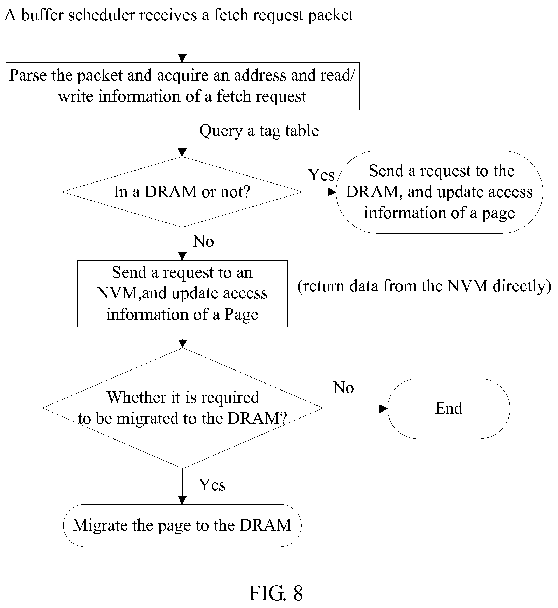

Referring to FIG. 8, a procedure in which the buffer scheduler processes the memory access request includes:
(1) After receiving the memory access request packet, the buffer scheduler parses the packet to obtain an address and read/write information of the memory access request.
(2) The buffer scheduler queries the tag table by using the address, to determine whether an accessed page is in the DRAM. If yes, go to (3), and if not, go to (4).
(3) The buffer scheduler sends the memory access request to the DRAM, and instructs a migration scheduler to update access information of the page. After obtaining data from the DRAM, the buffer scheduler encapsulates the data into a packet, and returns the packet to the processor. Processing of the request ends.
(4) The buffer scheduler sends the memory access request to the NVM. In this case, data is directly returned from the NVM to the buffer scheduler, and then encapsulated into a packet, and returned to the processor. At the same time, the buffer scheduler instructs the migration scheduler to update the access information of the page. Then, the migration scheduler determines whether the page needs to be migrated from the NVM to the DRAM. If not, processing of the memory access request ends; and if yes, go to (5).
(5) The migration scheduler starts a page migration operation, and updates the tag table. If there is still space in the DRAM, the migration scheduler directly places the page from the NVM to the DRAM; and if there is no space in the DRAM, the migration scheduler selects a to-be-replaced page from the DRAM and places the new page into the DRAM. It should be noted that the page migration herein and the process in which data is returned from the NVM may be executed concurrently.

Information stored in the tag table includes: an address of a page, which memory the page is located in, and a quantity of page access. Further, a major function of the tag table may be included, where the major function is to maintain which physical address space is currently located in the DRAM, and to maintain an access count of each page. The tag table may use direct addressing, or may use another manner such as a hash table to accelerate a search process and reduce space overheads. Update of the tag table is completed by the migration scheduler, which is completely transparent to software (for example, an OS, or a Hypervisor).

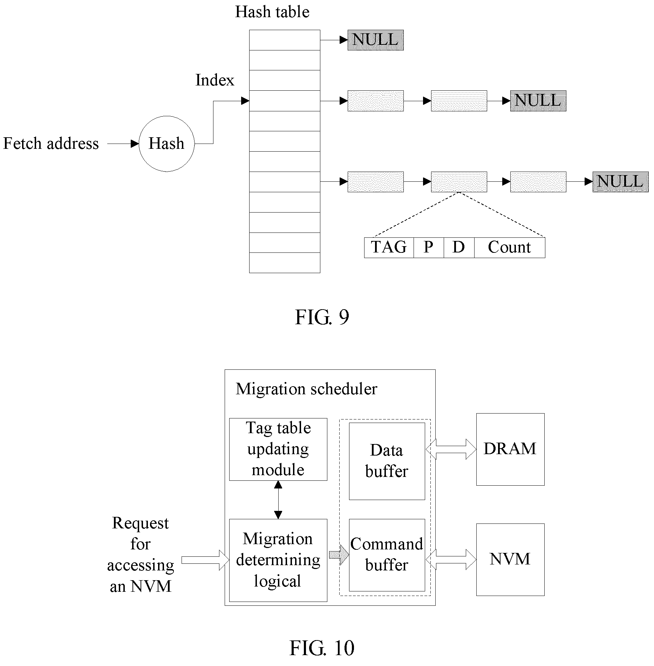

FIG. 9 is an example of implementation of the tag table, and a hash table is used to maintain information of each page. A fetch address is used in a hash operation, to obtain an index of the hash table. For a plurality of pages that are hashed to the same location (which is referred to as a hash collision), a linked list is used to connect information of the plurality of pages. Each hash table entry includes access information of a corresponding page: TAG is a complete address; P is a present bit, indicating whether the current page is in the DRAM, and if P is 1, it indicates that the current page is in the DRAM, and 0 indicates that the current page is not in the DRAM; D is a dirty bit, indicating whether the page is rewritten; and Count indicates a quantity of times the page is accessed and is used to guide migration of the page. When receiving a new memory access request, the buffer scheduler performs a hash operation to obtain an index, and compares the index with TAGs in the linked list one by one, until information matching a designated page is found.

Referring to FIG. 10, that the volatile memory is a DRAM, and the non-volatile memory is an NVM is used as an example; and an embodiment of the migration scheduler includes a migration determining logical, a tag table updating module, a command buffer, and a data buffer. The migration determining logical is configured to determine whether an accessed NVM page needs to be migrated to the DRAM. The migration determining logical includes a register, which is configured to store a migration threshold of a quantity of read/write access. The command buffer stores a command (which is mainly an address of a page that needs to be migrated, and an address where the page is placed in the DRAM) to migrate an NVM page; and the data buffer serves as an agent for data migration between the NVM and the DRAM. When the buffer scheduler receives a request to access the NVM (after the tag table is queried, a page of the access request is not in the DRAM), on one hand, the buffer scheduler adds the request to an NVM request queue to wait for scheduling; and at the same time, inputs the request to the migration scheduler. The migration determining logical queries, in the tag table, access information of the page, to determine whether the migration threshold is exceeded (the threshold is stored in the register inside the migration determining logical and can be configured), where the access information is mainly information of the quantity of read access and write access. If the migration threshold is exceeded, a command to migrate the page from the NVM to the DRAM is added to the command buffer. The migration scheduler first extracts data from the NVM to the data buffer, and then places the data from the data buffer to the target DRAM. After the migration is completed, information of the corresponding page needs to be updated in the tag table.

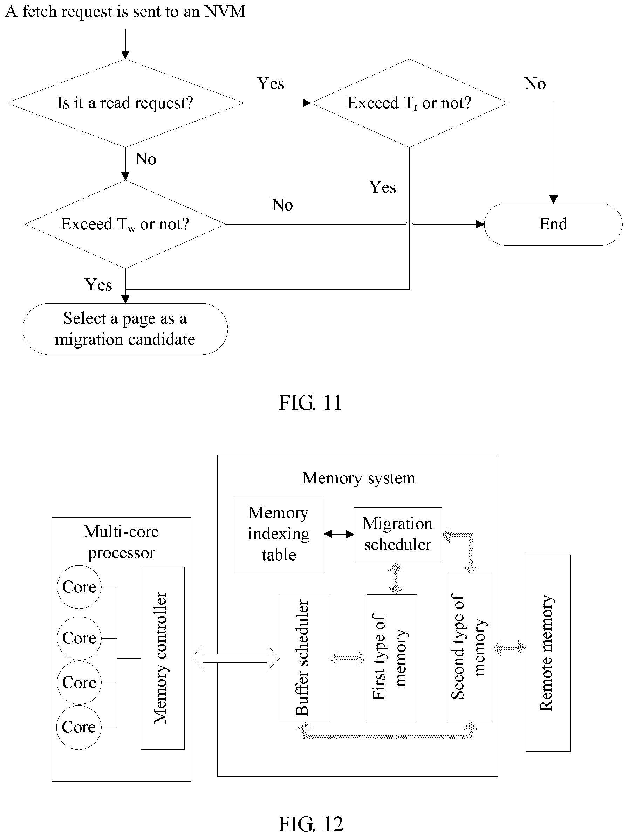

Referring to FIG. 11, FIG. 11 shows a procedure in which the migration scheduler determines whether a page needs to be migrated from the NVM to the DRAM. A simple migration policy can be set. Statistics of a quantity of read access and write access of a page in a recent period of time is collected, and a read access threshold and a write access threshold are set to Tᵣ and T_{w}, respectively. When the quantity of read access of a page in a recent period of time exceeds Tᵣ, or the quantity of write access of a page in a recent period of time exceeds T_{w}, the page is selected as a migration candidate:
(1) For a fetch request sent to the NVM, determine whether the fetch request is a read request. If yes, go to (2); and if not, go to (3).
(2) Determine whether the quantity of read access of the page in the recent period of time exceeds the read threshold Tᵣ. If not, migration is not required, and the procedure ends; and if yes, go to (4).
(3) Determine whether the quantity of write access of the page in the recent period of time exceeds the write threshold T_{w}. If not, migration is not required, and the procedure ends; and if yes, go to (4).
(4) Select the page as a migration candidate, and further compare the page with a to-be-replaced page in the DRAM. If the quantity of access of the page is greater, start the page migration and update information of the tag table.

Certainly, when it is determined in steps (2) and (3) that the write access or the write access exceeds the threshold, step (4) may be not performed, the page migration is directly started, and information of the tag table is updated. Certainly, another migration policy may also be set.

Checkpoint (checkpoint) protection that is transparent to software can further be implemented on the memory system in the foregoing embodiment: for example, the migration scheduler regularly backs up rewritten data in the DRAM to the NVM. A part of area in the NVM may be reserved for specially storing a checkpoint. For each page in the DRAM, a flag byte dirty is correspondingly set in the tag, to indicate whether the page is rewritten. The migration scheduler regularly examines a page in the DRAM, and backs up only rewritten data in the DRAM to the DRAM.

Further, to reduce checkpoint overheads, checkpoint may be performed when the DRAM is being refreshed (Refresh) or when background error scanning (ECC Scrubbing) is being performed. When the DRAM is being refreshed, the buffer scheduler needs to read data out from the DRAM to a row buffer (Row Buffer), and then write the data back. When the background error scanning is being performed, data needs to be read out to the buffer scheduler, and corrected data is written back to the DRAM after error checking is performed and an error is found. These two operations both need to read data from the DRAM, and the read-out data herein may be used to perform regular checkpoint, so as to reduce overheads without affecting normal operations of the DRAM.

For hybrid memories including a DRAM and an NVM, it is also possible to implement, in the buffer scheduler, hardware prefetch Prefetch for the DRAM. The hardware learns a page access mode, generates a Prefetch command, and migrates in advance a page that is predicated to be accessed in a short time to the DRAM, so as to improve performance. It is also possible to implement a hardware Victim in the buffer scheduler. A page replaced out from in the DRAM is very likely to be accessed again soon; and therefore, to place the replaced-out page in a Victim buffer can improve performance.

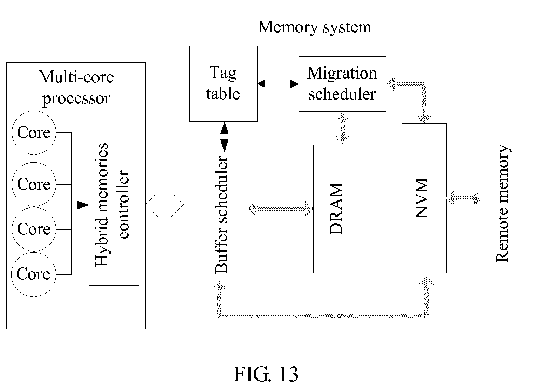

The present invention further discloses a computer system, including: a multi-core processor and a memory system, where the multi-core processor includes a memory controller that is configured to initiate a memory access request, and the memory system may be any memory system in the foregoing embodiments and internal module components thereof, for example, the embodiments corresponding to FIG. 3 to FIG. 11. For example, referring to FIG. 12, the memory system includes a memory indexing table, a migration scheduler, a buffer scheduler, a first type of memory, and a second type of memory. For functions and division of the modules, refer to the foregoing embodiments. For example, referring to FIG. 13, the memory system includes a tag table, a migration scheduler, a buffer scheduler, a DRAM, and an NVM (certainly, in another embodiment, the DRAM and the NVM may be a volatile memory and a non-volatile memory, respectively). For functions and division of the modules, refer to the foregoing embodiments.

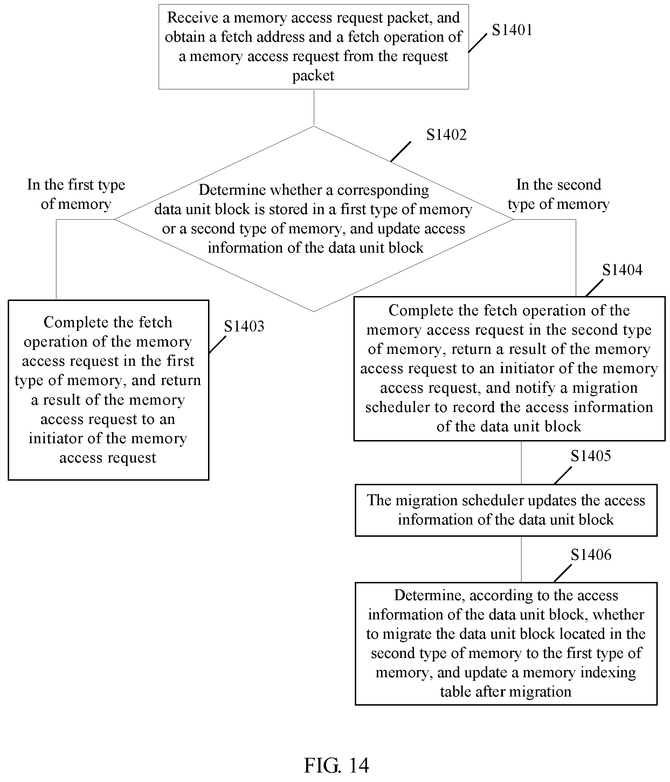

Referring to FIG. 14, FIG. 14 shows an embodiment of a method for processing a memory access request, where the method includes:
S1401: Receive a memory access request packet, and obtain a fetch address and a fetch operation of a memory access request from the request packet.
S1402: Query a memory indexing table by using the fetch address in the memory access request, to determine whether a data unit block corresponding to the access request is stored in a first type of memory or a second type of memory, and instruct a migration scheduler to update access information of the data unit block, where the first type of memory and the second type of memory are of different types.
S1403: Complete the fetch operation of the memory access request in the first type of memory if the data unit block is stored in the first type of memory, and return a result of the memory access request to an initiator of the memory access request.
S1404: Complete the fetch operation of the memory access request in the second type of memory if the data unit block is stored in the second type of memory, and return a result of the memory access request to an initiator of the memory access request.

In an embodiment, step S1404 includes:
migrating the data unit block to be accessed to the first type of memory if the data unit block is stored in the second type of memory, and then completing the fetch operation of the memory access request in the first type of memory, and returning a result of the memory access request to the initiator of the memory access request.

In another embodiment, step S1404 includes:
accessing the second type of memory directly if the data unit block is in the second type of memory and completing the fetch operation of the memory access request, and returning a result of the memory access request to the initiator of the memory access request.

In an embodiment, the method further includes:
S1405: The migration scheduler updates access information of the data unit block.
S1406: The migration scheduler determines, according to the access information of the data unit block, whether to migrate the data unit block located in the second type of memory to the first type of memory.

In an embodiment, the access information includes a quantity of access operations, and step S1405 includes:
comparing, by the migration scheduler, a recorded quantity of access operations of the data unit block with a migration threshold, and determining that migration is required if the quantity of access operations is greater than or equal to the migration threshold, and that migration is not required if the quantity of access operations is not greater than or equal to the migration threshold. Optionally, step S1405 further includes: upgrading, by the migration scheduler, information of the memory indexing table when determining that migration is required.

In this embodiment, management of a memory system that includes a first type of memory and a second type of memory that are of different types is implemented. Memory access requests may be completed in the first type of memory and the second type of memory, respectively, without interrupting processing, which can improve a memory access speed.

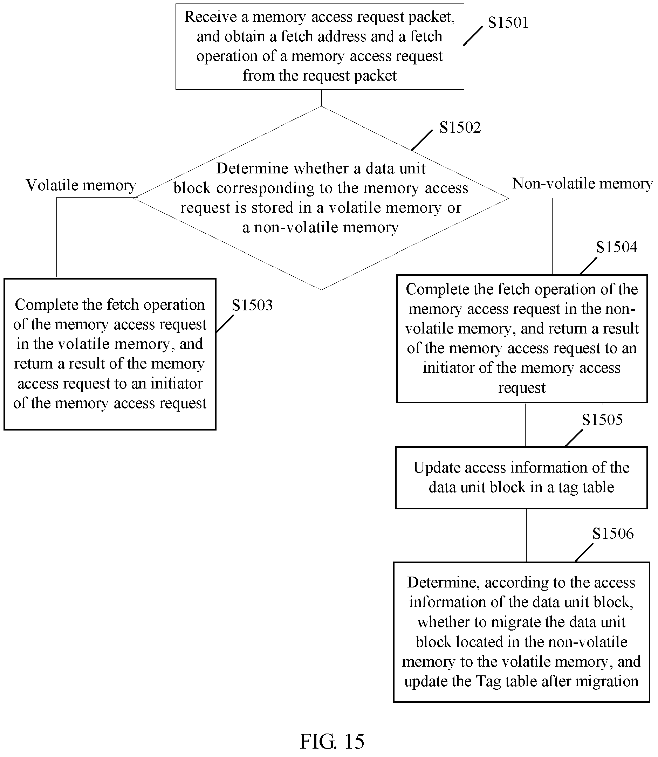

Referring to FIG. 15, FIG. 15 shows another embodiment of a method for processing a memory access request according to another embodiment, where the method includes:
S1501: Receive a memory access request packet, and obtain a fetch address and a fetch operation of a memory access request from the request packet.
S1502: Query a tag table by using the fetch address in the memory access request, to determine whether a data unit block corresponding to the access request is stored in a volatile memory or a non-volatile memory, where the tag table is used to indicate access information of the data unit block, and includes a fetch address, a memory location, and a quantity of fetch operations of the data unit block, and the memory location indicates whether the data unit block is stored in the volatile memory or the non-volatile memory.
S1503: Complete the fetch operation of the memory access request in the volatile memory if the data unit block is stored in the volatile memory, and return a result of the memory access request to an initiator of the memory access request.
S1504: Complete the fetch operation of the memory access request in the non-volatile memory if the data unit block is stored in the non-volatile memory, and return a result of the memory access request to an initiator of the memory access request.

In an embodiment, step S1504 includes:
migrating the data unit block to be accessed to the volatile memory if the data unit block is stored in the non-volatile memory, and then completing the fetch operation of the memory access request in the volatile memory, and returning a result of the memory access request to the initiator of the memory access request.

In another embodiment, step S1504 includes:
accessing the non-volatile memory directly if the data unit block is in the non-volatile memory, completing the fetch operation of the memory access request, and returning a result of the memory access request to the initiator of the memory access request.

Further, in an embodiment, the method for processing a memory access request further includes:
S1505: Update the access information of the data unit block in the tag table.
S1506: Determine, according to the access information of the data unit block, whether to migrate the data unit block located in the non-volatile memory to the volatile memory, and update the tag table after migration.

In an embodiment, the access information includes a quantity of access operations, and step S1506 includes:
comparing a recorded quantity of access operations of the data unit block with a migration threshold, and determining that migration is required if the quantity of access operations is greater than or equal to the migration threshold, and that migration is not required if the quantity of access operations is not greater than or equal to the migration threshold.

When it is determined that migration is required, an operation of migrating the data unit block stored in the non-volatile memory to the volatile memory is performed, and the tag table is updated after migration.

In an embodiment, the data unit block is a page.

In this embodiment, management of a memory system that includes a volatile memory and a non-volatile memory is implemented. Memory access requests may be completed in the volatile memory and the non-volatile memory, respectively, without interrupting processing, which can improve a memory access speed.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

The foregoing are merely exemplary embodiments of the present invention. A person skilled in the art may make various modifications and variations to the present invention without departing from the spirit and scope of the present invention.

## Claims

1. A memory system, comprising:
a first type of memory and a second type of memory, separately configured to store operating data of a processor, wherein the first type of memory and the second type of memory are of different types;
a buffer, configured to store a memory indexing table, wherein the memory indexing table comprises a fetch address of a data unit block located in the first type of memory; and
a buffer scheduler, configured to receive a memory access request sent by a memory controller, wherein the memory request comprises a fetch address and a fetch operation; determine, according to the fetch address and the memory indexing table, whether a data unit block corresponding to the fetch address is stored in the first type of memory or the second type of memory; perform the fetch operation of the memory access request in the determined first type of memory or second type of memory; and return a result of the fetch operation of the memory access request to the memory controller.

2. The memory system according to claim 1, wherein the buffer scheduler is further configured to: when it is determined that the data unit block corresponding to the fetch address is stored in the second type of memory, send a notification of updating access information of the data unit block; and the memory system further comprises:
a migration scheduler, configured to receive the notification sent by the migration scheduler and update the access information of the data unit block; determine, according to the access information of the data unit block, whether to migrate the data unit block in the second type of memory to the first type of memory; and update the memory indexing table after migration.

3. The memory system according to claim 1 or 2, wherein the buffer scheduler is specifically configured to: when it is determined that the data unit block is located in the first type of memory, complete the memory access request in the first type of memory; and when it is determined that the data unit block is located in the second type of memory, complete the memory access request in the second type of memory.

4. The memory system according to claim 1 or 2, wherein the buffer scheduler is specifically configured to: when it is determined that the data unit block is located in the first type of memory, complete the memory access request in the first type of memory; and when it is determined that the data unit block is located in the second type of memory, migrate the data unit block in the second type of memory to the first type of memory, and complete the memory access request in the first type of memory.

5. The memory system according to any one of claims 1 to 4, wherein the buffer scheduler comprises:
a parsing module, configured to parse a memory access request packet sent by the memory controller, to extract the memory access request, wherein the memory request comprises the fetch address and the fetch operation;
a first request queue, configured to store a memory access request for accessing the first type of memory;
a second request queue, configured to store a memory access request for accessing the second type of memory;
a determining module, configured to query the memory indexing table by using the fetch address, to determine whether a data unit block requested by a memory access request is in the first type of memory; store the memory access request in the first request queue if the data unit block is in the first type of memory; and store the memory access request in the second request queue if the data unit block is not in the first type of memory;
a first return queue, configured to store a result of a fetch operation of the memory access request for accessing the first type of memory;
a second return queue, configured to store a result of a fetch operation of the memory access request for accessing the second type of memory;
a scheduling module, configured to schedule the memory access request in the first request queue to the first type of memory to execute the fetch operation corresponding to the memory access request, and schedule the memory access request in the second request queue to the second type of memory to execute the fetch operation corresponding to the memory access request; and
a packaging module, configured to package results of fetch operations of a plurality of memory access requests into a packet, and return the packet to the memory controller.

6. The memory system according to any one of claims 1 to 5, wherein the access information comprises a quantity of access operations, and the migration scheduler comprises:
a register, configured to store a migration threshold;
a migration determining logical module, configured to compare the quantity of access operations with the migration threshold, and determine whether to migrate a data unit block in the second type of memory to the first type of memory according to a comparison result;
a command buffer, configured to store a migration command when the migration determining logical outputs a result that migration is required;
a data buffer, configured to temporarily store stored data that is in the second type of memory and of a data unit block corresponding to the migration command; and
an updating module, configured to update the quantity of access operations corresponding to the data unit block, and update the memory indexing table when the migration determining logical outputs the result that migration is required.

7. The memory system according to any one of claims 1 to 6, wherein the first type of memory is a volatile memory module, and the second type of memory is a non-volatile memory module.

8. The memory system according to any one of claims 1 to 6, wherein an access speed of the first type of memory is faster than an access speed of the second type of memory.

9. A memory system, comprising:
a volatile memory and a non-volatile memory, separately configured to store operating data of a processor;
a buffer, configured to store a tag table, wherein the tag table is used to indicate access information of a data unit block and comprises a fetch address, a memory location, and a quantity of fetch operations of the data unit block, and the memory location indicates whether the data unit block is stored in the volatile memory or the non-volatile memory; and
a buffer scheduler, configured to receive a memory access request of a memory controller, wherein the memory request comprises a fetch address and a fetch operation; query the tag table by using the fetch address, to determine whether the data unit block is stored in the volatile memory or the non-volatile memory; complete the fetch operation of the memory access request in the determined volatile memory or non-volatile memory; and return a result of the memory access request to the memory controller.

10. The memory system according to claim 9, wherein the buffer scheduler is further configured to send a notification of updating the access information of the data unit block, and the memory system further comprises:
a migration scheduler, configured to receive the notification and update the access information of the data unit block in the tag table; determine, according to the access information of the data unit block, whether to migrate the data unit block in the non-volatile memory to the volatile memory; and update the tag table after migration.

11. The memory system according to claim 9 or 10, wherein the buffer scheduler comprises:
a parsing module, configured to parse a memory access request packet sent by the memory controller, to extract the memory access request;
a first request queue, configured to store a memory access request for accessing the volatile memory;
a second request queue, configured to store a memory access request for accessing the non-volatile memory;
a determining module, configured to query a memory indexing table by using the fetch address, to determine whether a data unit block accessed by each memory access request is in the volatile memory, store the memory access request in the first request queue if the data unit block is in the volatile memory, and store the memory access request in the second request queue if the data unit block is not in the volatile memory; and send a notification of updating the access information of the data unit block;
a first return queue, configured to store a result of the memory access request for accessing the volatile memory;
a second return queue, configured to store a result of the memory access request for accessing the non-volatile memory;
a scheduling module, configured to schedule the memory access request in the first request queue to the volatile memory to execute a fetch operation corresponding to the memory access request, and schedule the memory access request in the second request queue to the non-volatile memory to execute a fetch operation corresponding to the memory access request; and
a packaging module, configured to package results of a plurality of memory access requests into a packet, and return the packet to the memory controller.

12. The memory system according to any one of claims 9 to 11, wherein the access information comprises the quantity of access operations, and the migration scheduler comprises:
a register, configured to store a migration threshold;
a migration determining logical module, configured to compare the quantity of access operations with the migration threshold to determine whether to migrate a page in the non-volatile memory to the volatile memory;
a command buffer, configured to store a migration command when the migration determining logical outputs a result that migration is required;
a data buffer, configured to temporarily store stored data that is in the non-volatile memory and of a data unit block corresponding to the migration command; and
a tag updating module, configured to update the quantity of access operations corresponding to the data unit block, and update the memory indexing table when the migration determining logical outputs the result that migration is required.

13. The memory system according to any one of claims 9 to 12, wherein the volatile memory is a DRAM (Dynamic Random Access Memory, dynamic random access memory), and the non-volatile memory is an NVM (Non-Volatile Memory, non-volatile memory).

14. A method for processing a memory access request, comprising:
Receiving a memory access request packet, and obtaining a fetch address and a fetch operation of a memory access request from the request packet;
querying a memory indexing table by using the fetch address in the memory access request, to determine whether a data unit block corresponding to the access request is stored in a first type of memory or a second type of memory; and instructing a migration scheduler to update access information of the data unit block, wherein the first type of memory and the second type of memory are of different types; and
completing the fetch operation of the memory access request in the first type of memory if the data unit block is stored in the first type of memory, and returning a result of the memory access request to an initiator of the memory access request; or
completing the fetch operation of the memory access request in the second type of memory if the data unit block is stored in the second type of memory, and returning a result of the memory access request to an initiator of the memory access request.

15. The method according to claim 14, wherein the completing the fetch operation of the memory access request in the second type of memory if the data unit block is stored in the second type of memory, and returning a result of the memory access request to an initiator of the memory access request comprises:
migrating the data unit block to be accessed to the first type of memory if the data unit block is stored in the second type of memory, and then completing the fetch operation of the memory access request in the first type of memory, and returning a result of the memory access request to the initiator of the memory access request.

16. The method according to claim 14, wherein the completing the fetch operation of the memory access request in the second type of memory if the data unit block is stored in the second type of memory, and returning a result of the memory access request to an initiator of the memory access request comprises:
accessing the second type of memory directly if the data unit block is in the second type of memory and completing the fetch operation of the memory access request, and returning a result of the memory access request to the initiator of the memory access request.

17. The method according to any one of claims 14 to 16, further comprising:
Determining, by the migration scheduler according to the access information of the data unit block, whether to migrate the data unit block located in the second type of memory to the first type of memory.

18. The method according to claim 17, wherein the access information comprises a quantity of access operations, and the determining, by the migration scheduler according to the access information of the data unit block, whether to migrate the data unit block located in the second type of memory to the first type of memory comprises:
comparing, by the migration scheduler, a recorded quantity of access operations of the data unit block with a migration threshold, and determining that migration is required if the quantity of access operations is greater than or equal to the migration threshold, and that migration is not required if the quantity of access operations is not greater than or equal to the migration threshold.

19. The method according to claim 18, further comprising:
updating, by the migration scheduler, information of the memory indexing table when determining that migration is required.

20. A method for processing a memory access request, comprising:
receiving a memory access request packet, and obtaining a fetch address and a fetch operation of a memory access request from the request packet;
querying a tag table by using the fetch address in the memory access request, to determine whether a data unit block corresponding to the access request is stored in a volatile memory or a non-volatile memory, wherein the tag table is used to indicate access information of the data unit block and comprises a fetch address, a memory location, and a quantity of fetch operations of the data unit block, and the memory location indicates whether the data unit block is stored in the volatile memory or the non-volatile memory; and
completing the fetch operation of the memory access request in the volatile memory if the data unit block is stored in the volatile memory, and returning a result of the memory access request to an initiator of the memory access request; or
completing the fetch operation of the memory access request in the non-volatile memory if the data unit block is stored in the non-volatile memory, and returning a result of the memory access request to an initiator of the memory access request.

21. The method according to claim 20, wherein the completing the fetch operation of the memory access request in the non-volatile memory if the data unit block is stored in the non-volatile memory, and returning a result of the memory access request to an initiator of the memory access request comprises:
migrating the data unit block to be accessed to the volatile memory if the data unit block is stored in the non-volatile memory, and then completing the fetch operation of the memory access request in the volatile memory, and returning a result of the memory access request to the initiator of the memory access request.

22. The method according to claim 20, wherein the completing the fetch operation of the memory access request in the non-volatile memory if the data unit block is stored in the non-volatile memory, and returning a result of the memory access request to an initiator of the memory access request comprises:
accessing the non-volatile memory directly if the data unit block is in the non-volatile memory and completing the fetch operation of the memory access request, and returning a result of the memory access request to the initiator of the memory access request.

23. The method according to any one of claims 20 to 22, wherein the access information comprises a quantity of access operations, and determining, according to the access information of the data unit block, whether to migrate the data unit block located in the non-volatile memory to the volatile memory comprises:
comparing a recorded quantity of access operations of the data unit block with a migration threshold, and determining that migration is required if the quantity of access operations is greater than or equal to the migration threshold, and that migration is not required if the quantity of access operations is not greater than or equal to the migration threshold.

24. The method according to any one of claims 20 to 23, further comprising:
updating the access information of the data unit block in the tag table; and
determining, according to the access information of the data unit block, whether to migrate the data unit block located in the non-volatile memory to the volatile memory, and updating the tag table after migration.

25. A computer system, comprising:
a multi-core processor, comprising a memory controller that is configured to initiate a memory access request; and
a memory system according to any one of claims 1 to 13.
